# EUROPEAN PATENT APPLICATION

(11) **EP 4 056 387 A1**
(43) Date of publication of application: **14.09.2022**
(21) Application number: 22160010.9
(22) Date of filing: 03.03.2022
(51) Int. Cl.: B60C 19/00, B60C 19/12

(54) **PNEUMATIC TIRE**

(30) Priority: 09.03.2021 JP 2021037659
(71) Applicant: Sumitomo Rubber Industries, Ltd., Kobe-shi, Hyogo-ken 651-0072 (JP)
(72) Inventor: SATO, Takuya, Kobe-shi, 651-0072 (JP); YUKAWA, Naoki, Kobe-shi, 651-0072 (JP)
(74) Representative: Manitz Finsterwald Patent- und Rechtsanwaltspartnerschaft mbB

(57) **Abstract**

A pneumatic tire having a sealant layer and a sound damper disposed on a tire inner cavity surface sufficiently exhibits air sealing performance even in a case where a foreign matter penetrates through a tread portion.

A pneumatic tire includes a tread portion 2. The pneumatic tire includes a sealant layer 10 disposed on a tire inner cavity surface 1i in the tread portion 2, a porous sound damper 11 disposed inward of the sealant layer 10 in a tire radial direction, and a barrier portion 12 disposed between the sealant layer 10 and the sound damper 11 for preventing a sealant liquid from permeating the sound damper 11. A strength of the barrier portion 12 is 2 to 25 (N).

## Description

### BACKGROUND OF THE INVENTION

### Field of the Invention

The present invention relates to a pneumatic tire.

### Background Art

Japanese Laid-Open Patent Publication No. 2020-104606 suggests a pneumatic tire in which a puncture-preventive sealant layer is disposed on an inner circumferential surface of a tread portion and a sound damper formed of a sponge material is adhered to an inner circumferential surface of the sealant layer. The pneumatic tire exhibits puncture sealing performance and road noise reducing performance by the sealant layer and the sound damper.

In the above-described pneumatic tire, sealant liquid permeates the sound damper with the elapse of time, and the sound damper itself may become adhesive. In such a case, if a foreign matter such as a nail penetrates through the tread portion to reach the sound damper, the sound damper tends to be easily broken. When the foreign matter is pulled out from the tread portion, both bits of the sound damper and the sealant liquid enter the through hole of the tread portion, and degradation of air sealing performance of the sealant liquid may be caused.

The present invention has been made in view of the above-described circumstances, and a main object of the present invention is to provide a pneumatic tire that has a sealant layer and a sound damper disposed on a tire inner cavity surface, and sufficiently exhibits air sealing performance even in a case where a foreign matter penetrates through a tread portion.

### SUMMARY OF THE INVENTION

The present invention is directed to a pneumatic tire that includes: a tread portion; a sealant layer disposed on a tire inner cavity surface in the tread portion, the sealant layer containing an adhesive sealant liquid; a porous sound damper disposed inward of the sealant layer in a tire radial direction; and a barrier portion disposed between the sealant layer and the sound damper for preventing the sealant liquid from permeating the sound damper, and a strength of the barrier portion is 2 to 25 (N).

In the pneumatic tire of the present invention, the barrier portion is preferably formed by a nonporous surface formed in the sound damper.

In the pneumatic tire of the present invention, the nonporous surface is preferably a thermally treated surface.

In the pneumatic tire of the present invention, the barrier portion is preferably an adhesive tape.

In the pneumatic tire of the present invention, the barrier portion is preferably a resin film.

In the pneumatic tire of the present invention, the sound damper is preferably adhered to the barrier portion via an adhesive.

In the pneumatic tire of the present invention, a specific gravity of the sound damper is preferably 20 to 80 kg/m³.

In the pneumatic tire of the present invention, a thickness of the sound damper is preferably 25 to 40 mm.

In the pneumatic tire of the present invention, a length of the sound damper in a tire axial direction is preferably not less than 60% of a length of the sealant layer in the tire axial direction.

In the pneumatic tire of the present invention, the length of the sound damper in the tire axial direction is preferably less than 100% of the length of the sealant layer in the tire axial direction.

In the pneumatic tire of the present invention, a thickness of the barrier portion is preferably 0.05 to 0.20 mm.

In the pneumatic tire of the present invention, the barrier portion preferably covers a side surface, in the tire axial direction, of the sound damper.

In the pneumatic tire of the present invention, preferably, the barrier portion does not cover an inner circumferential surface of the sound damper in the tire radial direction.

In the pneumatic tire of the present invention, the barrier portion may cover a part of the inner circumferential surface of the sound damper in the tire radial direction.

The pneumatic tire of the present invention has the above-described structure, and, therefore, can sufficiently exhibit air sealing performance even in a case where a foreign matter penetrates through the tread portion.

### BRIEF DESCRIPTION OF THE DRAWINGS

FIG. 1 is a tire meridian cross-sectional view of a pneumatic tire according to one embodiment of the present invention;
FIG. 2 is an enlarged view of a tread portion shown in FIG. 1;
FIG. 3 is an enlarged cross-sectional view of a sound damper and a barrier portion according to another embodiment of the present invention; and
FIG. 4 is an enlarged cross-sectional view of a sound damper and a barrier portion according to another embodiment of the present invention.

### DETAILED DESCRIPTION

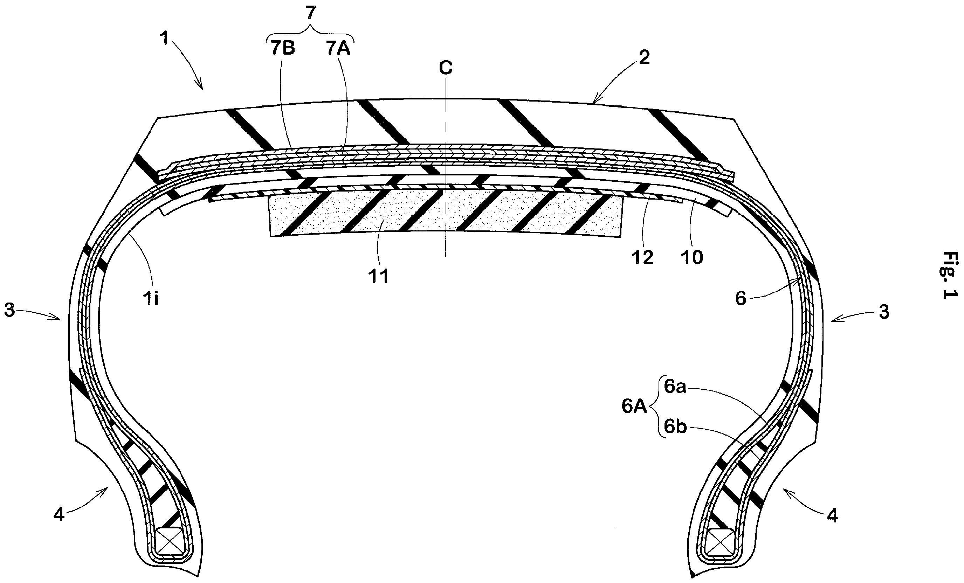

One embodiment of the present invention will be described below with reference to the drawings. FIG. 1 is a tire meridian cross-sectional view of a pneumatic tire (hereinafter, may be simply referred to as "tire") 1 in a normal state according to one embodiment of the present invention. In the present embodiment, the pneumatic tire 1 for a passenger car will be described as a preferable mode. However, the present invention may be adopted as, for example, a motorcycle pneumatic tire 1 or a heavy duty pneumatic tire 1.

The "normal state" represents a state where a tire is mounted on a normal rim and inflated to a normal internal pressure, and no load is applied to the tire in a case where the tire is a pneumatic tire for which various standards are defined. For tires for which various standards are not defined, the normal state represents a standard use state, corresponding to a purpose of use of the tire, in which the tire is not mounted to a vehicle and no load is applied to the tire. In the description herein, unless otherwise specified, dimensions and the like of components of the tire are represented as values measured in the normal state.

The "normal rim" represents a rim that is defined by a standard, in a standard system including the standard on which the tire is based, for each tire, and is, for example, "standard rim" in the JATMA standard, "Design Rim" in the TRA standard, or "Measuring Rim" in the ETRTO standard.

The "normal internal pressure" represents an air pressure that is defined by a standard, in a standard system including the standard on which the tire is based, for each tire, and is "maximum air pressure" in the JATMA standard, the maximum value recited in the table "TIRE LOAD LIMITS AT VARIOUS COLD INFLATION PRESSURES" in the TRA standard, or "INFLATION PRESSURE" in the ETRTO standard.

As shown in FIG. 1, in the tire 1 of the present embodiment, conventional tire components such as a carcass 6 and a belt layer 7 are disposed. For the tire components, known structures can be adopted as appropriate.

The carcass 6 extends from one of bead portions 4 through one of sidewall portions 3, a tread portion 2, and the other of the sidewall portions 3 to the other of the bead portions 4. The carcass 6 has at least one carcass ply. In the present embodiment, the carcass 6 has two carcass plies 6A. The carcass ply 6A is formed by, for example, covering an array of carcass cords with topping rubber. The carcass cord is, for example, disposed at an angle of 75 to 90° relative to the tire circumferential direction. To the carcass cords, for example, an organic fiber such as polyester fibers, nylon fibers, rayon fibers, polyethylene naphthalate fibers, and aramid fibers is applied.

The carcass ply 6A includes, for example, a body portion 6a and turned-up portions 6b. The body portion extends from the tread portion 2 through the sidewall portions 3 to bead cores. Each turned-up portion 6b is continuous with the body portion 6a, is turned up around the bead core from the inner side toward the outer side in the tire axial direction, and extends outwardly in the tire radial direction.

The belt layer 7 is disposed outward of the carcass 6 in the tire radial direction in the tread portion 2. The belt layer 7 includes at least one belt ply. In the present embodiment, the belt layer 7 includes two belt plies 7A, 7B. The belt plies 7A, 7B are each formed by, for example, covering an array of belt cords with topping rubber.

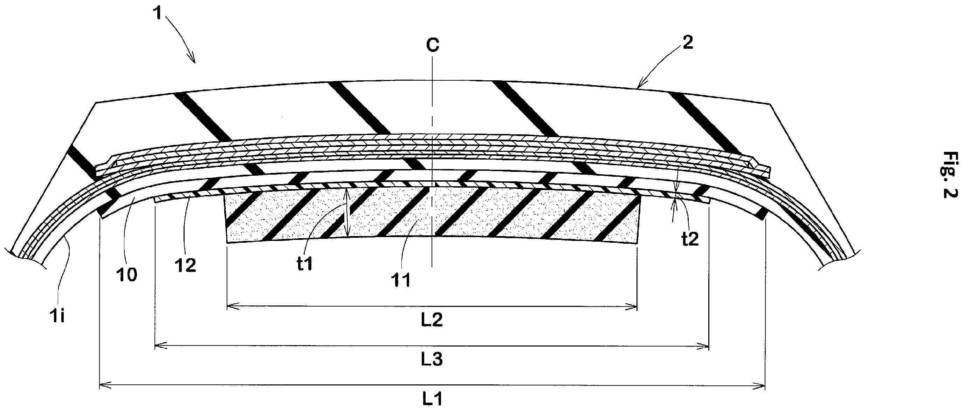

FIG. 2 is an enlarged view of the tread portion 2. As shown in FIG. 2, the tire 1 of the present invention has a self-recovering-type sealant layer 10 on a tire inner cavity surface 1i in the tread portion 2. The sealant layer 10 contains an adhesive sealant liquid. In a case where, for example, a foreign matter such as a nail gets stuck in the tread portion 2 to generate a through hole, the sealant layer 10 solidifies so as to close the through hole and can prevent air from escaping from the tire.

In the present invention, the tire 1 has a porous sound damper 11 disposed inward of the sealant layer 10 in the tire radial direction. The sound damper 11 can absorb vibration of air inside the tire during running, and contributes to reduction of noise generated by the tire.

In the present invention, the tire 1 includes a barrier portion 12 that is disposed between the sealant layer 10 and the sound damper 11 and prevents the sealant liquid from permeating the sound damper 11. A strength of the barrier portion 12 is 2 to 25 (N).

The strength of the barrier portion 12 represents a strength measured by a puncture strength test defined in JIS1707. That is, the strength represents a maximal force (N) measured until a needle penetrates through a test piece in a case where the test piece is fixed by a tool, and punctured by the semi-circular needle having a diameter of 1.0 mm and a tip shape radius of 0.5 mm at a test speed of 50±5 mm/min.

In the present invention, the tire 1 has the above-described structure. Therefore, even in a case where a foreign matter penetrates through the tread portion 2, air sealing performance can be sufficiently exhibited. The following mechanism can be inferred as the reason.

In general, a tire having a sealant layer and a sound damper disposed on a tire inner cavity surface reduces noise during normal running, and can exhibit air sealing performance in a case where a foreign matter gets stuck in the tread portion 2. However, in a conventional tire, the sealant liquid permeates the sound damper and the sound damper is likely to be partially broken. Furthermore, if the sound damper is broken, when a through hole is generated in the tread portion, bits of the sound damper enter the through hole to degrade air sealing performance.

The tire 1 of the present invention includes the barrier portion 12 described above, and thus effectively prevents the sealant liquid from permeating the sound damper 11, and the above-described problem can thus be inhibited. Moreover, the strength of the barrier portion 12 is defined as being not less than 2 N. Therefore, the barrier portion 12 has sufficient durability and allows air sealing performance to be maintained over a long time. Meanwhile, the strength of the barrier portion 12 is defined as being not higher than 25 N, and the barrier portion 12 thus has appropriate flexibility. Therefore, even if the tire inner cavity surface 1i is deformed, the barrier portion 12 easily follows the sound damper 11, separation of the barrier portion 12 is inhibited, and the sealant liquid can be assuredly inhibited from permeating the sound damper 11. Moreover, the barrier portion 12 having the flexibility has excellent processability in producing the tire and can also contribute to decrease of a defect rate in the production.

The structure of the present embodiment will be described below in more detail. The structures described below represent specific modes of the present embodiment. Therefore, needless to say, also when the structures described below are not provided, the present invention can exhibit the above-described effects. Also when any one of the structures described below is applied alone to the tire of the present invention having the above-described features, improvement of performance corresponding to each structure can be expected. Furthermore, in a case where some of the structures described below are applied in combination, complex performance improvement corresponding to the structures can be expected. The dimensions of the components described below represent dimensions measured when the tire is not mounted on a rim, a distance between the two bead cores is conformed to a distance in the normal state, and no load is applied to the tire.

Although the sealant layer 10 is disposed on, for example, an inner cavity surface of the tread portion 2, a part of the sealant layer 10 may be disposed on an inner cavity surface of the sidewall portion 3 (shown in FIG. 1). Thus, air sealing performance is further enhanced.

A thickness of the sealant layer 10 is, but is not limited to, for example, 1.0 to 5.0 mm and preferably 2.0 to 4.0 mm.

As a main component of a rubber composition of the sealant liquid, for example, butyl-based rubber is used. As a liquid polymer in the sealant liquid, liquid polybutene, liquid polyisobutene, or the like is used. As a curing agent in the sealant liquid, for example, an organic peroxide is used. However, the present invention is not limited thereto. For the sealant liquid contained in the sealant layer 10, a known material can be adopted as appropriate.

The sound damper 11 is disposed at, for example, the center portion of the tread portion 2 in the tire axial direction. In the present embodiment, the sound damper 11 has a rectangular cross-sectional shape, and extends over the entire circumference of the tire so as to have a constant cross-sectional shape. However, the sound damper 11 is not limited thereto. In the present invention, for example, a plurality of the sound dampers 11 may be disposed on the tire inner cavity surface 1i so as to be spaced from each other in the tire circumferential direction or the tire axial direction. Various structures can be adopted also for the cross-sectional shape of the sound damper 11.

A length L2 of the sound damper 11 in the tire axial direction is, for example, 60 to 100 mm and preferably 70 to 90 mm. In a preferable mode, the length L2 of the sound damper 11 is less than 100% of a length L1 of the sealant layer 10 in the tire axial direction. Meanwhile, the length L2 of the sound damper 11 is preferably not less than 60% of the length L1 of the sealant layer 10. Thus, noise performance and air sealing performance are enhanced in a well-balanced manner.

In a case where a thickness t1 of the sound damper 11 is small, the sound damper 11 tends to be easily broken and air sealing performance may be degraded. In a case where the thickness of the sound damper 11 is excessively large, enhancement of noise performance is saturated and the weight of the tire may be increased. From such a viewpoint, the thickness t1 of the sound damper 11 is, for example, 25 to 50 mm and preferably 30 to 40 mm.

In a case where a specific gravity of the sound damper 11 is excessively small, durability of the sound damper 11 may be reduced. In a case where the specific gravity of the sound damper 11 is excessively large, the weight of the tire may be increased. From such a viewpoint, the specific gravity of the sound damper 11 is, but is not limited to, for example, 20 to 80 kg/m³ and preferably 30 to 50 kg/m³.

The barrier portion 12 is structured in various manners. In the present embodiment, the barrier portion 12 is formed as, for example, a resin film. Examples of a material of the resin film include polyethylene, polypropylene, PET, and polystyrene. Nonwoven fabric may be adopted as another material of the barrier portion 12.

In the present embodiment, the sound damper 11 is adhered via an adhesive to the barrier portion 12 formed as the resin film. As the adhesive, a rubber-based adhesive, a urethane resin-based adhesive, or a modified silicone resin-based adhesive is preferably used. In another mode, the sound damper 11 may be adhered to the barrier portion 12 by a rubber-based tackifier, an acrylic tackifier, or a silicone-based tackifier.

In another embodiment, an adhesive tape may be used as the barrier portion 12. That is, the sound damper 11 may be adhered to the sealant layer 10 via the adhesive tape. In such a mode, a core material (resin film or nonwoven fabric) of the adhesive tape can inhibit the above-described permeation, and a similar effect can be obtained.

The barrier portion 12 may be formed by a nonporous surface formed in the sound damper 11. In this mode, the sound damper 11 can be used as a material of the barrier portion 12. Therefore, production cost for the tire can be reduced. Examples of a method for forming the nonporous surface of the sound damper 11 include heating treatments and chemical treatments. That is, the surface of the sound damper 11 may be made nonporous by forming the surface as a thermally treated surface or a chemically treated surface.

From the viewpoint of assuredly inhibiting the above-described permeation, a length L3 of the barrier portion 12 in the tire axial direction is preferably larger than a length of the outer circumferential surface of the sound damper 11 in the tire axial direction. Thus, even in a case where the sound damper 11 is deformed due to a centrifugal force in rotation of the tire, the sound damper 11 can be prevented from coming into contact with the sealant layer 10. As described below, the barrier portion 12 may be disposed at another portion such as a side surface of the sound damper 11.

The strength of the barrier portion 12 is preferably not less than 5 N and more preferably not less than 10 N, and is preferably not higher than 20 N and more preferably not higher than 15 N. A thickness t2 of the barrier portion 12 is, for example, 0.05 to 0.20 mm and preferably 0.10 to 0.15 mm. Thus, air sealing performance can be further enhanced.

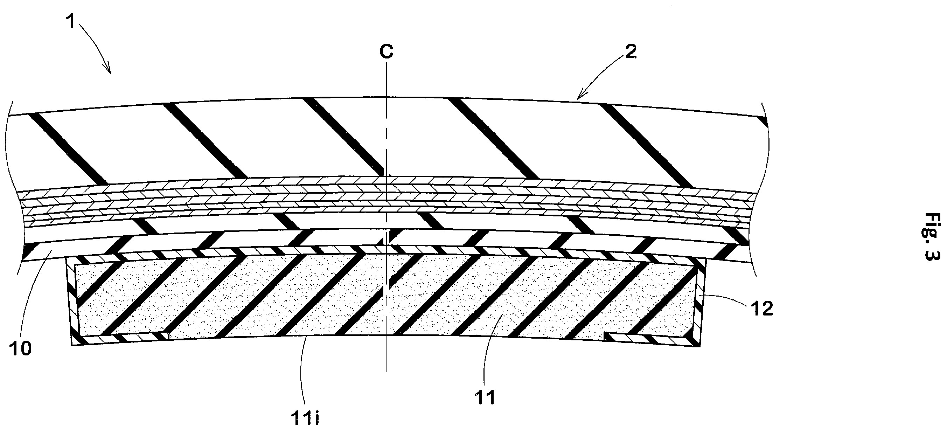

FIG. 3 is an enlarged view of the sound damper 11 and the barrier portion 12 according to another embodiment of the present invention. As shown in FIG. 3, the barrier portion 12 of the present embodiment is disposed so as to cover the entirety of the side surfaces, in the tire axial direction, of the sound damper 11 and a part of an inner circumferential surface 11i of the sound damper 11 in addition to being disposed between the sealant layer 10 and the sound damper 11. The barrier portion 12 having such a structure reduces damage to the side surfaces of the sound damper 11 and enhances air sealing performance.

An area of the barrier portion 12 disposed on the inner circumferential surface 11i of the sound damper 11 is not greater than 50% of an area of the entirety (including the portion covered by the barrier portion 12) of the inner circumferential surface 11i of the sound damper 11 and is preferably 5% to 25% thereof such that the above-described effect is exhibited while vibration absorbing performance of the sound damper 11 is assured.

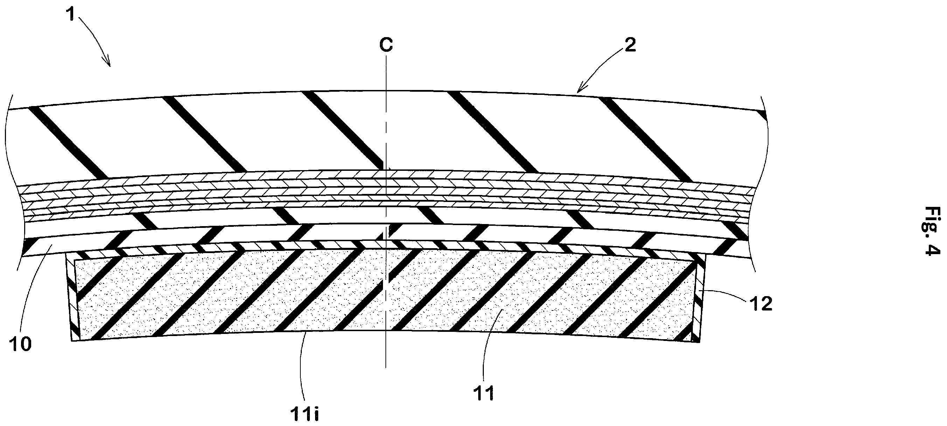

FIG. 4 is an enlarged view of the sound damper 11 and the barrier portion 12 according to still another embodiment of the present invention. As shown in FIG. 4, the barrier portion 12 of the present embodiment is disposed so as to cover the entirety of the side surfaces, in the tire axial direction, of the sound damper 11 in addition to being disposed between the sealant layer 10 and the sound damper 11. Meanwhile, the barrier portion 12 of the present embodiment does not cover the inner circumferential surface 11i of the sound damper 11. In the present embodiment, a vibration absorbing surface of the sound damper 11 can be assuredly increased while damage to the side surfaces of the sound damper 11 is reduced.

Although the pneumatic tire according to one embodiment of the present invention has been described above in detail, the present invention is not limited to the above-described specific embodiment, and various modifications can be made to implement the present invention.

### Examples

Pneumatic tires having the basic structure shown in FIG. 1 and a size of 215/55R17 based on the specifications in Tables 1 to 2 were produced. As a comparative example, a sample of a pneumatic tire having no barrier portion was produced. The tire of the comparative example had substantially the same structure as the tires of the examples except for the above-described component. The thickness of the sealant layer was 3.0 mm in each test tire. The length of the sealant layer in the tire axial direction was 186 mm in each test tire. For these test tires, air sealing performance was tested. The specifications common to the test tires and the test method were as follows.
Rim on which the tire was mounted: 17×7.5J
Tire internal pressure: 250 kPa

### <Air sealing performance>

Running with each test tire on a drum tester in a state where a vertical load of 4.6 kN was applied to the tire was performed at a speed of 200 km/h for one hour. Thereafter, 50 nails (diameter of 5.0 mm) were driven into the tread portion. After theses nails were removed, the number of portions (portions at which air leakage stopped) at which an air sealing effect was exhibited by the sealant layer was measured. The results are such that the greater the number is, the more excellent the exhibited air sealing performance is.

The test results are indicated in Tables 1 to 2.

**[Table 1]**

| | Comp. Ex. | Ex. 1 | Ex. 2 | Ex. 3 | Ex. 4 | Ex. 5 | Ex. 6 | Ex. 7 | Ex. 8 |
|---|---|---|---|---|---|---|---|---|---|
| Presence or absence of barrier portion | absent | present | present | present | present | present | present | present | present |
| Material of barrier portion | | resin film | resin film | resin film | resin film | resin film | resin film | resin film | resin film |
| Strength (N) of barrier portion | - | 13 | 2 | 5 | 10 | 15 | 20 | 25 | 13 |
| Specific gravity (kg/m³) of sound damper | 40 | 40 | 40 | 40 | 40 | 40 | 40 | 40 | 15 |
| Thickness t1 (mm) of sound damper | 35 | 35 | 35 | 35 | 35 | 35 | 35 | 35 | 35 |
| Air sealing performance (the number of the portions) | 35 | 46 | 44 | 45 | 45 | 46 | 48 | 48 | 42 |

**[Table 2]**

| | Ex. 9 | Ex. 10 | Ex. 11 | Ex. 12 | Ex. 13 | Ex. 14 | Ex. 15 | Ex. 16 |
|---|---|---|---|---|---|---|---|---|
| Presence or absence of barrier portion | present | present | present | present | present | present | present | present |
| Material of barrier portion | resin film | resin film | resin film | resin film | resin film | Thermally treated surface of sound damper | nonwoven fabric | adhesive tape |
| Strength (N) of barrier portion | 13 | 13 | 13 | 13 | 13 | 3 | 5 | 6 |
| Specific gravity (kg/m³) of sound damper | 20 | 80 | 40 | 40 | 40 | 40 | 40 | 40 |
| Thickness t1 (mm) of sound damper | 35 | 35 | 20 | 25 | 40 | 35 | 35 | 35 |
| Air sealing performance (the number of the portions) | 45 | 47 | 41 | 45 | 49 | 47 | 45 | 46 |

As indicated in Tables 1 to 2, it was confirmed that the tires of the examples sufficiently exhibited air sealing performance even in a case where a foreign matter penetrated through the tread portion.

## Claims

1. A pneumatic tire (1) comprising:
a tread portion (2);
a sealant layer (10) disposed on a tire inner cavity surface (1i) in the tread portion (2), the sealant layer (10) containing an adhesive sealant liquid;
a porous sound damper (11) disposed inward of the sealant layer (10) in a tire radial direction; and
a barrier portion (12) disposed between the sealant layer (10) and the sound damper (11) for preventing the sealant liquid from permeating the sound damper (11), wherein
a strength of the barrier portion (12) is 2 to 25 (N).

2. The pneumatic tire (1) according to claim 1, wherein the barrier portion (12) is formed by a nonporous surface formed in the sound damper (11).

3. The pneumatic tire (1) according to claim 2, wherein the nonporous surface is a thermally treated surface.

4. The pneumatic tire (1) according to claim 1, wherein the barrier portion (12) is an adhesive tape.

5. The pneumatic tire (1) according to claim 1, wherein the barrier portion (12) is a resin film.

6. The pneumatic tire (1) according to claim 5, wherein the sound damper (11) is adhered to the barrier portion (12) via an adhesive.

7. The pneumatic tire (1) according to any one of claims 1 to 6, wherein a specific gravity of the sound damper (11) is 20 to 80 kg/m³.

8. The pneumatic tire (1) according to any one of claims 1 to 7, wherein a thickness (t1) of the sound damper (11) is 25 to 40 mm.

9. The pneumatic tire (1) according to any one of claims 1 to 8, wherein a length (L2) of the sound damper (11) in a tire axial direction is not less than 60% of a length (L1) of the sealant layer (10) in the tire axial direction.

10. The pneumatic tire (1) according to any one of claims 1 to 9, wherein the length (L2) of the sound damper (11) in the tire axial direction is less than 100% of the length (L1) of the sealant layer (10) in the tire axial direction.

11. The pneumatic tire (1) according to any one of claims 1 to 10, wherein a thickness (t2) of the barrier portion (12) is 0.05 to 0.20 mm.

12. The pneumatic tire (1) according to any one of claims 1 to 11, wherein the barrier portion (12) covers a side surface, in the tire axial direction, of the sound damper (11).

13. The pneumatic tire (1) according to claim 12, wherein the barrier portion (12) does not cover an inner circumferential surface (11i) of the sound damper (11) in the tire radial direction.

14. The pneumatic tire (1) according to claim 12, wherein the barrier portion (12) covers a part of the inner circumferential surface (11i) of the sound damper (11) in the tire radial direction.
